# EUROPEAN PATENT APPLICATION

(11) **EP 4 498 495 A1**
(43) Date of publication of application: **29.01.2025**
(21) Application number: 22950001.2
(22) Date of filing: 31.08.2022
(51) Int. Cl.: H01M 50/249

(54) **BATTERY BOX AND BATTERY HAVING SAME, AND ELECTRIC DEVICE**

(30) Priority: 07.07.2022 CN 202221733370 U
(71) Applicant: Contemporary Amperex Technology Co., Limited, Ningde, Fujian 352100 (CN)
(72) Inventor: ZHOU, Kai, Ningde, Fujian 352100 (CN)
(74) Representative: Ziebig Hengelhaupt Intellectual Property Attorneys Patentanwaltskanzlei PartGmbB
(86) International application number: PCT/CN2022/116177
(87) International publication number: WO 2024/007437

(57) **Abstract**

The present disclosure provides a battery box, a battery, and an electric device. A battery box is provided according to one embodiment of the present disclosure. The battery box includes: a bottom plate disposed on a bottom of the battery box; a side plate forming a side portion enclosing the battery box; and a positioning member passing through the bottom plate and the side plate sequentially to maintain a relative positional relationship between the side plate and the bottom plate. According to one embodiment of the present disclosure, the battery box is provided to improve the connection stability between the bottom plate of the battery box and the side plate of the battery box by arranging a positioning member. A relative position of the side plate and the bottom plate is maintained by the connection stability between the bottom plate and the side plate, to improve a stress-bearing capacity of the side plate of the battery box. By doing so, the risk, which the side plate of the battery box may tilt relative to the bottom plate and extrude the battery module or battery cell in the battery box when the side plate is subjected to stress, is reduced.

## Description

### PRIORITY INFORMATION

The present application is submitted based on and claims a priority to Chinese Patent Application No. 202221733370.2, filed on July 07, 2022, entitled "Battery box, battery, and electric device", the entire contents of which are incorporated herein by reference.

### FIELD

The present disclosure relates to the field of energy storage technologies, and more particularly, to a battery box, a battery, and an electric device.

### BACKGROUND

In the related art, a mounting space of a battery is relatively narrow, and a battery box may be extruded when contacting with other external members, and more particularly, for the battery used in a vehicle, during the bumpy driving of the vehicle. In a bumpy process of the vehicle, the members close to the battery box in the vehicle may collide and extrude the battery box, resulting in a movement of a battery module in the battery box, or even causing a collision short circuit of two adjacent battery modules.

### SUMMARY

In view of the above problems, embodiments of the present disclosure provide a battery box, a battery, and an electric device, capable of improving a connection stability between a bottom plate of the battery box and a side plate of the battery box, and reducing a risk that the side plate of the battery box may tilt relative to the bottom plate and extrude the battery module when the side plate is subjected to stress.

A battery box is provided according to one embodiment of the present disclosure. The battery box includes: a bottom plate disposed on a bottom of the battery box; a side plate forming a side portion enclosing the battery box; and a positioning member passing through the bottom plate and the side plate sequentially to maintain a relative positional relationship between the side plate and the bottom plate, the positioning member including a positioning cap and a positioning rod connected to each other, a radial dimension of the positioning cap being greater than a radial dimension of the positioning rod, the positioning cap being attached to a bottom of the bottom plate, and the positioning rod passes through the bottom plate and the side plate sequentially.

According to one embodiment of the present disclosure, the battery box is provided to improve the connection stability between the bottom plate of the battery box and the side plate of the battery box by arranging a positioning member. A relative position of the side plate and the bottom plate is maintained by the connection stability between the bottom plate and the side plate, to improve a stress-bearing capacity of the side plate of the battery box. By doing so, the risk, which the side plate of the battery box may tilt relative to the bottom plate and extrude the battery module in the battery box when the side plate is subjected to stress, is reduced, thereby reducing a phenomenon in which adjacent battery modules or adjacent battery cells within the battery box are displaced from one another.

This embodiment provides that a connection relationship between a positioning rod and a positioning cap is consistent with a connection relationship between the side plate and the bottom plate by fitting the positioning cap with the bottom plate and by fitting the positioning rod with the side plate, thereby enabling a relative external force subjected by the side plate and the bottom plate to be transferred to the positioning cap and the positioning rod. A relative movement between the side plate and bottom plate is limited by a connection strength between the positioning rod and the positioning cap, which limits both a relative movement of the side plate with respect to the bottom plate and a relative movement of the bottom plate with respect to the side plate.

In some embodiments, the battery box further includes a heat dissipation plate disposed between a bottom of the side plate and a top of the bottom plate, the positioning rod passing through the bottom plate, the heat dissipation plate, and the side plate sequentially. The positioning rod provided by the embodiments is capable of constraining not only the relative movement between the side plate and the bottom plate, but also a relative movement between the side plate and the heat dissipation plate and between the heat dissipation plate and the bottom plate.

In some embodiments, the battery box further includes a sleeve disposed in an interior of the side plate and arranged around a part of the positioning rod. In the embodiments, by connecting the positioning rod and the side plate by the sleeve, the sleeve is capable of dispersing an interaction force between the positioning rod and the side plate, to reduce an occurrence of localized stress concentration between the positioning rod and the side plate.

In some embodiments, the heat dissipation plate and the side plate are spaced apart from each other, and the battery box further includes a positioning pad disposed between the heat dissipation plate and the bottom plate and arranged around a part of the positioning rod. The positioning pad provided by the embodiments serves a similar function as the positioning cap, and further serves a same function of restraining the positioning rod to reduce tilting or displacement of a portion of the positioning rod located between the heat dissipation plate and the bottom plate.

In some embodiments, the sleeve and the positioning pad are integrally formed into a cap structure. An integrally formed cap structure provided by the embodiments has a positioning function itself, and a connection relationship between the sleeve and the positioning pad of the cap structure is similar to a connection between the positioning rod and the positioning cap, which is further able to constrain a tilting of the side plate with respect to the bottom plate.

In some embodiments, the cap structure includes a rivet nut, and the positioning member includes a rivet bolt engaged with the rivet nut. By engaging the rivet nut with the rivet bolt, both a positioning effect of and a connection purpose between the rivet nut and the rivet bolt can be realized, to transfer an external force on the side plate to the rivet nut and the rivet bolt, and to limit the tilting of the side plate with respect to the bottom plate by the rivet nut and the rivet bolt.

In some embodiments, the interior of the side plate is of a hollow structure and a plurality of barriers is disposed inside the hollow structure and arranged at intervals in a height direction of the side plate, the rivet bolt and/or the rivet nut passing through at least two layers of barriers of the plurality of barriers. In the embodiments, the rivet bolt and/or the rivet nut passes through at least two layers of barriers of the plurality of barriers. When the rivet bolt and/or the rivet nut interacts with the side plate, an increase in an interaction surface between the rivet bolt and/or the rivet nut and the side plate can reduce an occurrence of localized stress concentration between the rivet bolt and/or the rivet nut and the side plate.

In some embodiments, the bottom plate, the heat dissipation plate, and the side plate are detachably connected together, and the heat dissipation plate and the bottom plate are spaced apart from each other in a height direction of the battery box. In the battery box provided by the embodiments, the bottom plate, the heat dissipation plate, and the side plate can be individually disassembled and maintained, which realizes both a structural flexibility of the battery box and a heat effect between the heat dissipation plate and the bottom plate.

In some embodiments, the sleeve sequentially passes through the heat dissipation plate and the side plate in the height direction of the battery box, and the positioning rod sequentially passes through the bottom plate, the sleeve, the heat dissipation plate, and the side plate in the height direction of the battery box. By connecting the bottom plate, heat dissipation plate, and side plate with the rivet nut and rivet bolt, a connection stability of individual members can be improved while realizing individual independence of the bottom plate, heat dissipation plate, and side plate.

According to one embodiment of the present disclosure, a battery is provided. The battery includes at least one battery cell or battery module, and the battery box according to one embodiment of the present disclosure. The at least one battery cell or battery module is disposed in an accommodating space of the battery box.

According to one embodiment of the present disclosure, an electric device is provided. The electric device includes the battery according to one embodiment of the present disclosure.

The above description is merely an overview of the technical solutions of the present disclosure. To facilitate a clear understanding of technical means of the present disclosure and the implementations of the technical solutions in accordance with the contents of the specification, and to clarify and explain the above and other objectives, features, and advantages of the present disclosure, specific embodiments of the present disclosure will be described below.

### BRIEF DESCRIPTION OF THE DRAWINGS

Various other advantages and benefits will become apparent to those skilled in the art after reading the detailed description of some embodiments given below. The accompanying drawings are used for a purpose of illustrating the some embodiments only, rather than limiting the present disclosure. Moreover, throughout the accompanying drawings, same elements are denoted by same reference signs. In the accompanying drawings:
FIG. 1 is a schematic diagram illustrating a structure of a vehicle according to some embodiments of the present disclosure;
FIG. 2 is a schematic exploded view of a battery according to some embodiments of the present disclosure;
FIG. 3 is a schematic diagram illustrating a structure of a battery module according to some embodiments of the present disclosure;
FIG. 4 is a schematic exploded view of a battery cell according to some embodiments of the present disclosure;
FIG. 5 is a schematic diagram illustrating a structure of a battery box according to an embodiment of the present disclosure;
FIG. 6 is a side view of the battery box illustrated in FIG. 5;
FIG. 7 is an A-A cross-sectional view of the battery box illustrated in FIG. 6; and
FIG. 8 is a schematic diagram illustrating a partial structure of the battery box illustrated in FIG. 7.

The reference signs are explained as follows:
vehicle 1000;
battery 100; frame 200;
battery box 10; first portion 11; second portion 12; flange 13;
battery module 20; battery cell 21; terminal cap 211; electrode terminal 211a; housing 212; electrode assembly 213;
bottom plate 110;
side plate 120; barrier 121; outer side wall 122; inner side wall 123; mounting plate 124;
positioning member 130; positioning cap 131; positioning rod 132;
rivet nut 140; sleeve 141; positioning pad 142;
heat dissipation plate 150.

### DETAILED DESCRIPTION

Embodiments of the technical solution of the present disclosure will be described in detail below with reference to the accompanying drawings. The following embodiments are only used to illustrate, rather than to limit the protection scope of the present disclosure, the technical solutions of the present disclosure more clearly, and therefore only serve as examples.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "include", "have", and any variations in detailed description, claims, and above accompanying drawings of the present disclosure are intended to cover non-exclusive inclusions.

In the description of the embodiments of the present disclosure, the technical terms "first", "second", etc. are used to distinguish different objects, and cannot be understood as indicating or implying a relative importance or implicitly specifying a number, a particular order, or a primary or secondary relationship of the technical features indicated. In the description of embodiments of the present disclosure, "plurality" means at least two, unless otherwise specifically defined.

In the present disclosure, reference to "embodiments" means that a particular feature, structure, or characteristic described in conjunction with the embodiments may be included in at least one embodiment of the present disclosure. Occurrence of the term at various places in the detailed description does not necessarily refer to the same embodiment, or to separate or alternative embodiments that are mutually exclusive of other embodiments. It is understood by those skilled in the art, both explicitly and implicitly, that the embodiments described herein may be combined with other embodiments.

In the description of the embodiments of the present disclosure, the term "and/or" in the present disclosure is only an association relationship describing associated objects, and means that there can be three kinds of relationships. For example, A and/or B can mean three situations: A exists alone, A and B exist at the same time, and B exists alone. In addition, the character "/" in the present disclosure generally represents that associated objects before and after the character "/" are in an "or" relationship.

In the description of the embodiments of the present disclosure, the term "plurality" refers to more than two (including two). Similarly, "plurality of groups" refers to more than two groups (including two), and "plurality of slices" refers to more than two slices (including two).

In the description of the embodiments of the present disclosure, technical terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In the description of the embodiments of the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

In existing vehicles, battery packs of electric vehicles need to match collision safety requirements of a whole vehicle. For example, a frame of the battery box is not allowed to contact battery cells after a collision of the vehicle, and the battery cells of the battery pack are not allowed to leak liquid, etc. Moreover, a design of the battery box should be integrated with many dimensions, such as a weight of the battery box, a volume utilization, and a collision safety.

When a side wall of the battery box is frequently subjected to an external force, the side wall of the battery box may be tilted or deformed after being subjected to the external force, and a battery module in the battery box may be extruded and displaced. Although problems of tilting or deformation of the side wall of the battery box due to extrusion may be alleviated to a certain extent by increasing a material strength and a thickness of the side wall of the battery box, an increased the material strength and thickness of the side wall of the battery box may lead to an increase in weight and cost of the battery box, which is contrary to a comprehensive design of the battery box.

In order to solve a technical problem that the side wall of the battery box on the market may tilt or deform after being subjected to the external force, the present disclosure provides the battery box to improve a tilt-resistant capability of the battery box by arranging a positioning member between a side plate and a bottom plate.

The battery box provided by the embodiments of the present disclosure may be used in a battery. The battery box is used to accommodate the battery cell or the battery module, e.g., the battery is required for devices such as vehicles, ships, and the like that require use of electrical energy. The battery includes the battery box and the battery cell or the battery module.

For convenience of illustration, the following embodiments are illustrated with an example of a battery according to an embodiment of the present disclosure.

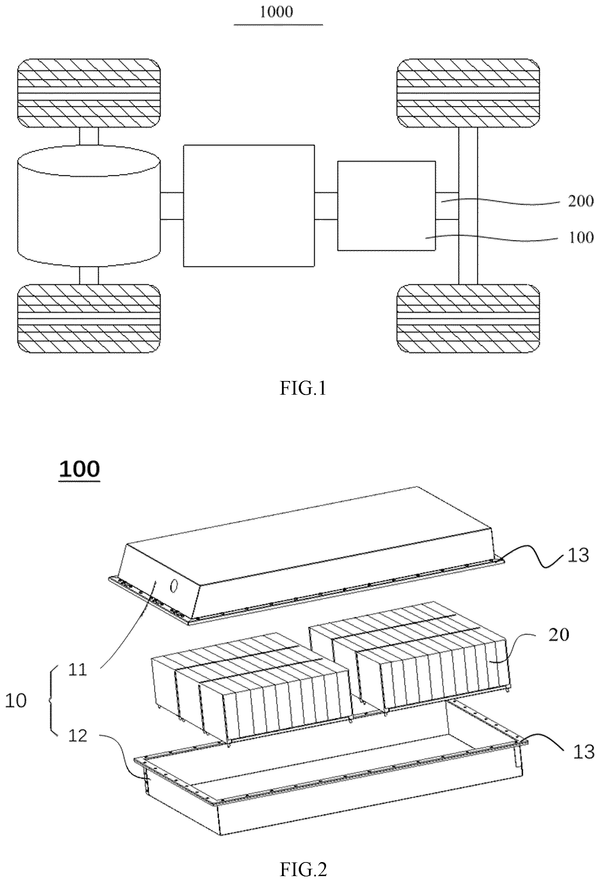

Referring to FIG. 1, FIG. 1 is a schematic diagram illustrating a structure of the vehicle according to some embodiments of the present disclosure. A battery 100 and a frame 200 are disposed in a vehicle 1000, and the battery 100 may be disposed on the frame 200. Multiple batteries 100 may be stacked from top to bottom on the frame 200, or may be laid on the frame 200.

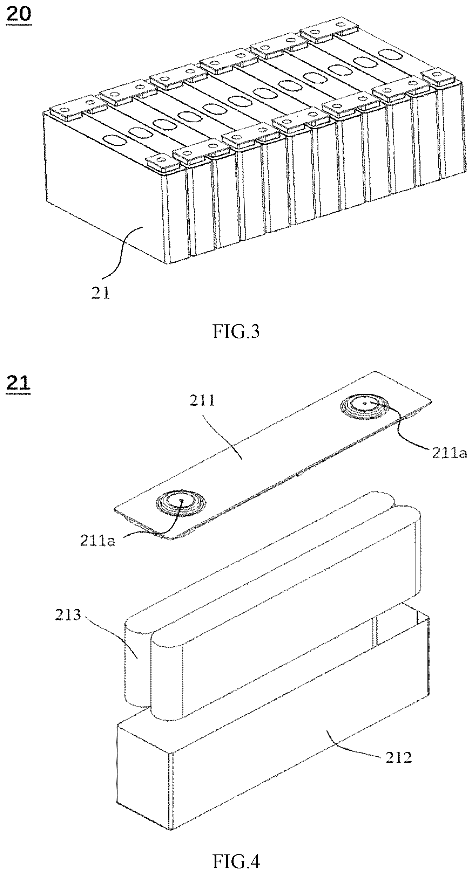

Referring to FIG. 2 and FIG. 3, FIG. 2 is a schematic exploded view illustrating a battery 100 according to some embodiments of the present disclosure, and FIG. 3 is a schematic diagram illustrating a structure of the battery module according to some embodiments of the present disclosure. The battery 100 includes a battery box 10 and a battery cell 21, and the battery cell 21 is accommodated in the battery box 10. The battery box 10 is configured to provide an accommodating space for the battery cell 21, and the battery box 10 may have a variety of structures. In some embodiments, the battery box 10 may include a first portion 11 and a second portion 12. The first portion 11 and the second portion 12 cover each other, and the first portion 11 and the second portion 12 together define the accommodating space configured to accommodate the battery cell 21. In some embodiments, to ensure a sealing effect, each of an edge of both the first portion 11 and the second portion 12 is provided with a flange 13 fitting with each other. The second portion 12 may be of a hollow structure with an opening at one end, and the first portion 11 may be a plate-like structure. The first portion 11 covers an opening side of the second portion 12 to define the accommodating space together with the second portion 12. The first portion 11 and the second portion 12 may both be of the hollow structure with the opening at one end, and an opening side of the first portion 11 covers the opening side of the second portion 12. Of course, the battery box 10 formed by the first portion 11 and the second portion 12 may be of various shapes, e.g., a cylinder, a rectangular prism, etc.

In the battery 100, multiple battery cells 21 are provided. The multiple battery cells 21 may be connected in series or in parallel or in mixed connection with each other. The mixed connection means that the multiple battery cells 21 are connected in both series and in parallel. The multiple battery cells 21 may be directly connected in series or in parallel or mixed together, and then a whole formed by the multiple battery cells 21 is accommodated in the battery box 10. Of course, the battery 100 can also be formed by a battery module 20 composed of multiple battery cells 21 that are connected in series or in parallel or in mixed connection with each other, and multiple battery modules 20 then are connected in series or in parallel or in mixed connection with each other to form a whole and accommodated in the battery box 10. The battery 100 may further include other structures. For example, the battery 100 may further include a busbar configured to realize an electrical connection between the plurality of battery cells 21.

The battery cell 21 may be a secondary battery or a primary battery. It may further be a lithium-sulfur battery, a sodium-ion battery, or a magnesium-ion battery, but is not limited thereto. The battery cell 21 may be in a shape of the cylinder, a flat body, the rectangular prism, or other shapes, and the like.

FIG. 3 is a schematic diagram illustrating a structure of a battery module 20 according to an embodiment of the present disclosure. Referring to FIG. 3, the battery module 20 may include the multiple battery cells 21. The multiple battery cells 21 may be connected in series or in parallel or in mixed connection to form the battery module 20, and multiple battery modules 20 may further be connected in series or in parallel or in mixed connection to form the battery 100. The battery cell 21 is generally classified into three types according to a packaging method: a cylindrical battery cell 21, a square-shaped cube battery cell 21, and a soft-packed battery cell 21, which is not limited by the embodiments of the present disclosure. But for a concise description, the following embodiments are all illustrated with the square-shaped cube battery cell 21 as an example.

FIG. 4 is a schematic exploded view of the battery cell 21 according to some embodiments of the present disclosure. The battery cell 21 is a smallest unit that is composed of the battery 100. As illustrated in FIG. 4, the battery cell 21 includes a terminal cap 211, a housing 212, and an electrode assembly 213.

The terminal cap 211 is a member that covers an opening of the housing 212 to insulate an interior environment of the battery cell 21 from an exterior environment. A shape of the terminal cap 211 may be adapted to fit a shape of the housing 212 to match the housing 212. In some embodiments, the terminal cap 211 may be made of a material having a certain degree of hardness and strength (e.g., aluminum alloy). In this way, the terminal cap 211 is not easily deformed when subjected to extrusion and collision, enabling the battery cell 21 to have a higher structural strength and an improved safety performance. Functional members, such as an electrode terminal 211a and the like, may be disposed on the terminal cap 211. The electrode terminal 211a may be configured to be electrically connected to the electrode assembly 213 for outputting or inputting electrical energy from the battery cell 21. In some embodiments, a stress release mechanism, configured to release an internal stress in the battery cell 21 when the internal stress or temperature of the battery cell 21 reaches a threshold value, may further be disposed on the terminal cap 211. In some embodiments, an insulating member may further be disposed on an interior side of the terminal cap 211. The insulating member may be configured to isolate electrical connection members in the housing 212 from the terminal cap 211, in order to reduce a risk of a short-circuit. For example, the insulating member may be plastic, rubber, and the like.

The housing 212 is a member configured to fit with the terminal cap 211 to form the interior environment of the battery cell 21. The formed interior environment may be configured to accommodate the electrode assembly 213, an electrolyte (not illustrated in the drawings), and other members. The housing 212 and the terminal cap 211 may be individual members, and an opening may be disposed at the housing 212. The interior environment of the battery cell 21 is formed by arranging the terminal cap 211 to cover the opening at the housing 212. In some embodiments, the terminal cap 211 and the housing 212 may further be integrated. In a further embodiment, a common connecting surface may be formed between the terminal cap 211 and the housing 212 prior to other members entering the housing. When the interior of the housing 212 is required to be enclosed, the terminal cap 211 may cover the housing 212. The housing 212 may be of various shapes and various sizes, such as a rectangular prism, a cylinder, a hexagonal prism, and the like. In a further embodiment, a shape of the housing 212 may be determined according to a specific shape and size of the electrode assembly 213. A material of the housing 212 may be various, such as, copper, iron, aluminum, stainless steel, aluminum alloy, plastic, and the like, which is not particularly limited by embodiments of the present disclosure.

The electrode assembly 213 is a member where the electrochemical reaction occurs in the battery cell 21. The housing 212 may include one or more electrode assemblies 213 therein. The electrode assembly 213 is mainly formed by a positive electrode sheet and a negative electrode sheet wound or placed in layers, and a separator is usually disposed between the positive electrode sheet and the negative electrode sheet. Portions of the positive electrode sheet and the negative electrode sheet having an active material constitute a main body portion of the electrode assembly 213. Portions of the positive electrode sheet and the negative electrode sheet not having the active material each constitute a tab (not illustrated in the drawings). A positive electrode tab and a negative electrode tab may be together disposed on one end of the main body portion or separately on two ends of the main body portion. During charging and discharging of the battery 100, a positive active material and a negative active material react with the electrolyte, and the tab connects to the electrode terminal 211a to form a current circuit.

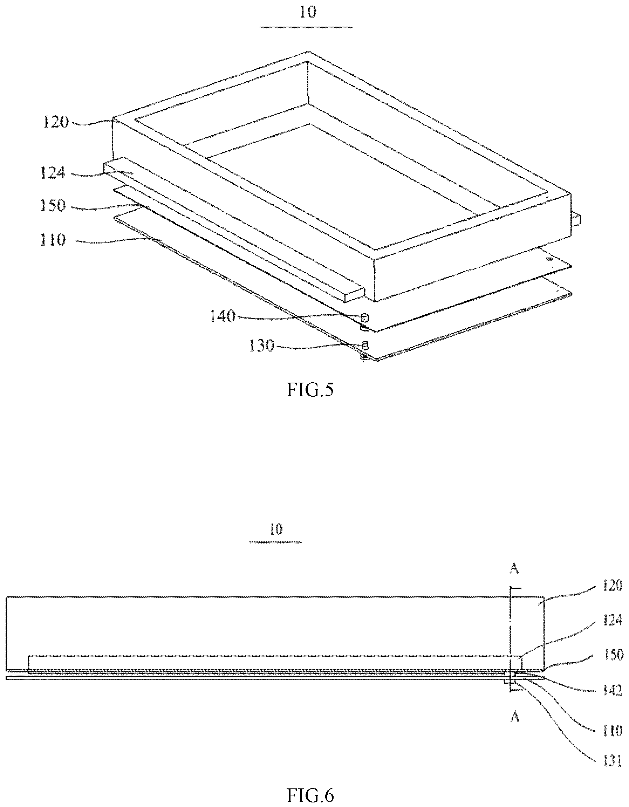

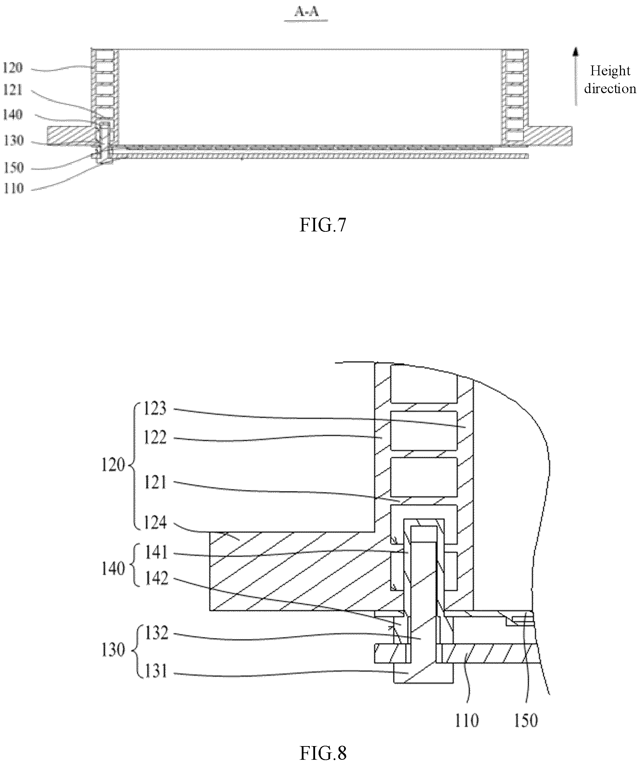

Referring to FIG. 5 to FIG. 8, FIG. 5 is a schematic diagram illustrating a structure of the battery box according to the embodiment of the present disclosure. FIG. 6 is a side view of the battery box illustrated in FIG. 5. FIG. 7 is an A-A cross-sectional view of the battery box illustrated in FIG. 6. FIG. 8 is a schematic diagram illustrating a partial structure of the battery box illustrated in FIG. 7.

According to one embodiment of the present disclosure, the battery box 10 is provided. The battery box 10 includes a bottom plate 110, a side plate 120, and a positioning member 130. The bottom plate 110 is disposed on a bottom of the battery box 10. The side plate forms a side portion enclosing the battery box 10. The positioning member 130 passes through the bottom plate 110 and the side plate 120 sequentially to maintain a relative positional relationship between the side plate 120 and the bottom plate 110.

In this embodiment, a specific position and a number of side plates 120 are not limited because the side plate 120 need to be determined according to a stress direction of the battery box 10. When the battery box 10 has a stress direction, the side plate 120 may be disposed on one side in line with the stress direction or on two opposite sides. In addition, according to a placement of the battery box 10, an upper and lower position of the bottom plate 110 and the side plate 120 may be changed. The side plate 120 may be located above the bottom plate 110 or below the bottom plate 110.

Further, in the embodiment of the present disclosure, "maintain a relative positional relationship between the side plate 120 and the bottom plate 110" includes a case of maintaining an angle between the side plate 120 and the bottom plate 110, and a case of positioning the side plate 120 in a parallel direction.

In a further embodiment, the battery box 10 is a top opening structure. The structure of the battery box 10 includes the cylinder, the flat body, the rectangular prism, or other shapes, and the like. The side plate 120 and the positioning member 130 are not limited to being distributed in a straight line. The side plate 120 and the positioning member 130 may further be arranged to be distributed in a curved surface along a curved structure of the battery box 10, in a folded line, or the like. Taking an example that the positioning member 130 is able to maintain the angle between the side plate 120 and the bottom plate 110, the positioning member 130 is arranged to be distributed in a direction parallel to the side plate 120. When the side plate 120 is arranged to be distributed obliquely with respect to the bottom plate 110, the angle between the side plate 120 and the bottom plate 110 is an obtuse angle or an acute angle. At this time, the positioning member130 is likewise arranged to be distributed obliquely with respect to the bottom plate110, and an angle between the positioning member 130 and the bottom plate 110 is an obtuse angle or an acute angle. In other words, the described maintaining the relative positional relationship between the side plate 120 and the bottom plate 110 by the positioning member 130 in the present disclosure, which is to maintain the angle between the side plate 120 and the bottom plate 110.

The following is described by arranging the battery box 10 in a rectangular structure as an embodiment. With the battery box 10 being arranged in the rectangular structure, the side plate 120 is arranged as a long side wall corresponding to a length direction of the battery box 10 or a wide side wall corresponding to a width direction of the battery box 10. The positioning member 130 is distributed in the direction parallel to the side plate 120, i.e., in a vertical direction at which the side plate 120 is located.

In addition, a side plate 120 with the positioning member 130 is arranged depending on a distribution of an external force subjected by the battery box 10. When a direction of the external force is subjected by the battery box 10 is consistent with a distribution direction of the long side wall, a positioning member 130 or multiple positioning members130 at intervals may be disposed at the side plate 120 of the long side wall. When the direction of the external force subjected by the battery box 10 is consistent with a distribution direction of the wide side wall, a positioning member 130 or multiple members 130 at intervals may be disposed at the side plate 120 of the wide side wall. When the direction of the external force subjected by the battery box 10 is distributed around surrounding side walls of the battery box 10, multiple positioning members 130 at intervals may be disposed at both the side plates 120 of the long side wall and the wide side wall.

In some embodiments, the battery box 10 is arranged in the rectangular structure, and two adjacent side plates 120 of the battery box 10 are arranged with two positioning members 130. By arranging two positioning members 130 on the two adjacent side plates 120, a force balance of the battery box 10 can be improved, reducing an occurrence of one side of the battery box 10 tilting and causing another side to tilt after being subjected to the external force, and reducing a risk that the side plate 120 of the battery box 10 is tilted to extrude the battery module 20 in the housing.

The positioning member 130 may be arranged in an integrated structure, or in a joint structure formed by assembling multiple members. The positioning member 130 may be formed by metal materials such as carbon steel, spring steel, etc., or composite materials. The positioning member 130 may be welded to the battery box 10 or detachably connected to the battery box 10. A shape of the positioning member 130 is determined according to a shape of the battery box 10. The positioning member 130 may be arranged as a bolt, a screw, a stud or a rivet, all of which are within the protection scope of the present disclosure.

According to the embodiment of the present disclosure, the battery box 10 is provided to improve a connection stability between the bottom plate 110 and the side plate 120 by arranging the positioning member 130, and to improve a stress-bearing capacity of the side plate 120 of the battery box 10. By doing so, a risk, which the side plate 120 of the battery box 10 may tilt relative to the bottom plate 110 and extrude the battery module 20 in the housing when the side plate 120 is subjected to stress, is reduced, thereby reducing an occurrence of the side plate 120 of the battery box 10 tilting and pushing two adjacent battery modules 20 to displace from each other when the side plate 120 being subjected by an external extrusion force.

In some embodiments, the positioning member 130 includes a positioning cap 131 and a positioning rod 132 connected to each other. A radial dimension of the positioning cap 131 is greater than a radial dimension of the positioning rod 132. The positioning cap 131 is attached to a bottom of the bottom plate 110. The positioning rod 132 passes through the bottom plate 110 and the side plate 120 sequentially.

In the embodiments, the positioning cap 131 may be arranged as a disk-like structure. The radial dimension of the positioning cap 131 is greater than the radial dimension of the positioning rod 132. A through-hole matching with the positioning rod 132 is disposed in the bottom plate 110, and the through-hole only allows the positioning rod 132 to pass through, but not the positioning cap 131. Therefore, subsequent to the positioning member 130 completing assembly, an axial movement of the positioning rod 132 can be limited by the positioning cap 131.

In addition, the positioning cap 131 is arranged to attach with the bottom of the bottom plate 110, enabling no gap for movement exist between the positioning cap 131 and the bottom of the bottom plate 110. Accordingly, subsequent to the positioning member 130 completing assembly, a radial sway of the positioning rod 132 can be limited by a fit between the positioning cap 131 and the bottom plate 110, which limits both a relative movement of the side plate 120 relative to the bottom plate 110, and a relative movement of the bottom plate 110 relative to the side plate 120.

This embodiment provides that a connection relationship between the positioning rod 132 and the positioning cap 131 is consistent with a connection relationship between the side plate 120 and the bottom plate 110 by fitting the positioning cap 131 with the bottom plate 110 and by fitting the positioning rod 132 with the side plate 120, thereby enabling a relative external force subjected by the side plate 120 and the bottom plate 110 to be transferred to the positioning cap 131 and the positioning rod 132. A relative movement between the side plate 120 and bottom plate 110 is limited by a connection strength between the positioning rod 132 and the positioning cap 131.

In some embodiments, the battery box 10 further includes a heat dissipation plate 150 disposed between a bottom of the side plate 120 and a top of the bottom plate 110. The positioning rod 132 passes through the bottom plate 110, the heat dissipation plate 150, and the side plate 120 sequentially.

In the embodiments, the side plate 120 is formed into a cylindrical structure. A top of the side plate 120 and the bottom of the side plate 120 both have an opening. The heat dissipation plate 150 is mounted on the opening at the bottom of the side plate 120. The heat dissipation plate 150 is arranged as a water-cooled heat dissipation plate and an air-cooled heat dissipation plate, which can dissipate heat for the battery cell 21 or the battery module 20 in the battery box 10. The bottom plate 110 is disposed at a side of the heat dissipation plate 150 opposite to the side plate 120, and plays a protective role for the heat dissipation plate 150.

The positioning rod 132 provided by the embodiments is capable of constraining not only the relative movement between the side plate120 and the bottom plate 110, but also a relative movement between the side plate 120 and the heat dissipation plate 150 and between the heat dissipation plate 150 and the bottom plate 110.

In some embodiments, the battery box 10 further includes a sleeve 141 disposed in an interior of the side plate 120 and arranged around a part of the positioning rod 132.

In the embodiments, a sleeve hole matching the sleeve 141 is disposed in the side plate 120. The sleeve 141 is screwed to the sleeve hole, or is riveted to the sleeve hole. An exterior wall of the sleeve 141 is in full contact with an interior of the side plate 120, to maximize a contact area between the sleeve 141 and the side plate120.

Similarly, a tube hole matching the positioning rod 132 is disposed in the sleeve 141. The positioning rod 132 is screwed to the tube hole, or is riveted to the tube hole. An exterior wall of the positioning rod 132 is in full contact with the tube hole of the sleeve 141, to maximize a contact area between the positioning rod 132 and sleeve 141.

In the embodiments, the positioning rod 132 connects with the side plate 120 by the sleeve 141, which can disperse an interaction force between the positioning rod 132 and the side plate 120, improving a force balance between the positioning rod 132 and the side plate 120, and alleviating a localized stress concentration between the positioning rod 132 and the side plate 120.

In some embodiments, the heat dissipation plate 150 and the side plate 110 are spaced apart from each other. The battery box 10 further includes a positioning pad 142 disposed between the heat dissipation plate 150 and the bottom plate 110 and arranged around a part of the positioning rod 132.

In the embodiments, a gap between the heat dissipation plate 150 and the bottom plate 110 can play a role in dissipating heat for the heat dissipation plate 150. The embodiment of the present application proposes to provide a positioning pad 142 at the gap between the heat dissipation plate 150 and the bottom plate 110, and the positioning pad 142 can not only play a role in restricting the opposite movement of the heat dissipation plate 150 and the bottom plate 110, but also play a role in constraining a tilting of the positioning rod 132.

In a further embodiment, the positioning pad 142 is arranged around the part of positioning rod 132 and has a clearance fit with the positioning rod 132, to improve an assembly smoothness between the positioning rod 132 and the positioning pad 142. When the positioning rod 132 has a tilt subsequent to being subjected to the external force, a swaying of the positioning rod 132 can be limited to a certain extent by the positioning pad 142, enabling to constrain the positioning rod 132 to tilt within a gap range between the positioning pad 142 and the positioning rod 132.

The positioning pad 142 provided by the embodiments serves a similar function as the positioning cap 131, and further serves a same function of constraining the positioning rod 132 to reduce tilting or displacement of a portion of the positioning rod 132 located between the heat dissipation plate 150 and the bottom plate 110.

In some embodiments, the sleeve 41 and the positioning pad 142 are integrally formed into a cap structure.

In the embodiments, the sleeve 141 forms a cap of the cap structure and is disposed in the side plate 120. The positioning pad 142 forms a brim of the cap structure and is disposed in the gap between the heat dissipation plate 150 and the bottom plate 110. An upper surface and a lower surface of the positioning pad 142 are attached to a bottom of the heat dissipation plate 150 and a top of the bottom plate 110, respectively. The positioning pad 142 is attached to fit with the heat dissipation plate 150 and the bottom plate 110, enabling no gap for movement between the positioning pad 142 and the heat dissipation plate 150 and between the positioning pad 142 and the bottom plate 110. The cap structure, subsequent to completing assembly, can limit a radial sway of the sleeve 141 by the attached fit between the positioning pad 142 and the heat dissipation plate 150 and between the positioning pad 142 and bottom plate 110.

In some embodiments, the cap structure includes a rivet nut 140, and the positioning member 130 includes a rivet bolt engaged with the rivet nut 140.

By engaging the rivet nut 140 with the rivet bolt, both a positioning effect of and a connection purpose between the rivet nut 140 and the rivet bolt can be realized, to transfer an external force on the side plate 120 to the rivet nut 140 and the rivet bolt, and to limit the tilting of the side plate 120 with respect to the bottom plate 110 by the rivet nut and the rivet bolt.

An integrally formed rivet nut 140 provided by the embodiments has a positioning function itself. A connection between the sleeve 141 of the rivet nut 140 and the positioning pad 142 is similar to a connection between the positioning rod 132 and the positioning cap 131, which is further able to constrain the tilting of the side plate 120 with respect to the bottom plate 110. Further, during a collision of the whole vehicle, the cap structure and the positioning member 130 may indirectly bear a collision load. The cap structure and the positioning member 130 with a higher shear resistance may increase a failure threshold of the side wall of the battery box 10.

In some embodiments, the interior of the side plate 120 is of the hollow structure and multiple barriers 121 are disposed inside the hollow structure and arranged at intervals in a height direction of the side plate 120. The rivet bolt and/or the rivet nut 140 passes through at least two layers of barriers 121 of the multiple barriers 121.

In the embodiments, multiple gaps between the multiple barriers 121 disposed in the interior of the side plate 120 can serve to reduce heat transfer, enabling heat of the battery box 10 to be dissipated directionally through the heat dissipation plate 150. In the embodiments, the rivet bolt and/or the rivet nut 140 passes through at least two layers of barriers 120 of the multiple barriers 120, thereby increasing an interaction surface area, improving a force balance and reducing an occurrence of localized stress concentration between the side plate 120 and the rivet bolt and/or the rivet nut 140.

In the embodiments, the rivet bolt and/or the rivet nut passes through at least two layers of barriers 121 of the multiple barriers 121. When the rivet bolt and/or the rivet nut 140 interacts with the side plate 120, an increase in an interaction surface between the rivet bolt and/or the rivet nut 140 and the side plate 120 can reduce an occurrence of localized stress concentration between the rivet bolt and/or the rivet nut 140 and the side plate 120.

Further, a height value of the rivet nut 140 should be higher than a second layer of barriers 121 of the side plate 120 (the second barrier 121 of the multiple barriers 121 from bottom to top) and not less than a diameter of the rivet nut 140. A height value of the rivet bolt is higher than the second layer of barriers 121 of the side plate 120 and not less than 0.5 times a diameter of the rivet bolt. By limiting the height values of the rivet nut 140 and the rivet bolt, an interaction surface area between the rivet nut 140 and the rivet bolt can be increased, and a phenomenon in which the rivet nut 140 and the rivet bolt tilt toward each other or even fall off due to insufficient interaction surface can be decreased when the rivet nut 140 and the rivet bolt interact with each other.

Further, the side plate 120 includes an outer side wall 122 and an inner side wall 123 spaced apart from each other. The multiple barriers 121 are disposed between the outer side wall 122 and the inner side wall 123. A yield strength of the positioning member 130 is greater than a yield strength of the side plate 120 of the battery box 10 and a yield strength of the barriers 121. The positioning member 130 can be arranged as a carbon steel or a spring steel. In the case where the battery box 10 is subjected to the external force with a tendency to deform and tilt, the positioning member 130 does not have a tendency to deform and can play a role in blocking a tilting and a deformation of the battery box 10, reducing an occurrence of extruding the battery module 20 in the housing subsequent to the battery box 10 being deformed.

An elastic deformation volume and/or a plastic deformation volume of the positioning member 130 is smaller than a gap between two adjacent battery modules 20. A material of the positioning member 130 is selected according to the gap between the battery modules 20. When the gap between the battery modules 20 is smaller, a hardness of the positioning member 130 is greater. When the spacing between the battery modules 20 is greater, the hardness of the positioning member 130 is smaller.

The positioning member 130 provided by the embodiments can play a role in supporting the battery box 10 to reduce deformation, and at the same time, since the positioning member 130 has a certain degree in elastic deformation and/or plastic deformation, by the elastic deformation and/or plastic deformation, the positioning member 130 can further reduce a fracture phenomenon of the positioning member 130 due to high rigidity subsequent to being subjected to the external force.

In some embodiments, the bottom plate 110, the heat dissipation plate 150, and the side plate 120 are detachably connected together, and the heat dissipation plate 150 and the bottom plate 110 are spaced apart from each other in a height direction of the battery box 10.

In the battery box 10 provided by the embodiments, the bottom plate 110, the heat dissipation plate 150, and the side plate 120 can be individually disassembled and maintained, which realizes both a structural flexibility of the battery box 10 and a heat dissipation between the heat dissipation plate 150 and the bottom plate 110.

In some embodiments, the sleeve 141 sequentially passes through the heat dissipation plate 150 and the side plate 120 in the height direction of the battery box 10. The positioning rod 132 sequentially passes through the bottom plate 110, the sleeve 141, the heat dissipation plate 150, and the side plate 120 in the height direction of the battery box 10.

In the embodiments, the through-hole matching with the positioning rod 132 is disposed in the bottom plate 110. A through-hole matching with the sleeve 141 of the rivet nut 140 is disposed in each of the heat dissipation plate 150 and the side plate 120, enabling the sleeve 141 of the rivet nut 140 to match with the side plate 120 subsequent to passing through the heat dissipation plate 150 through the through-hole, and enabling the rivet bolt to pass through the bottom plate 110 to match with the sleeve 141 of the rivet nut 140

In addition, a fastener may be provided by the embodiments of the present disclosure. The fastener is configured to tighten the bottom plate 110, the heat dissipation plate 150, and the side plate 120, to improve an assembly reliability among the bottom plate 110, the heat dissipation plate 150, and the side plate 120, reducing an occurrence of detachment among the bottom plate 110, the heat dissipation plate 150, and the side plate 120.

In the battery box 10 provided by the embodiments, the bottom plate 110, the heat dissipation plate 150, and the side plate 120 can be individually disassembled and maintained, which realizes the structural flexibility of the battery box 10 and a connection stability among the individual members by the positioning member 130.

According to one embodiment of the present disclosure, the battery 100 is provided. The battery 100 includes at least one battery cell 211 or battery module 20, and the battery box 10 according to one embodiment of the present disclosure. The at least one battery cell 21 or battery module 20 is disposed in an accommodating space of the battery box 10.

In the embodiments, arrangements for the side plate 120 and the positioning member 130 of the battery box 10 are corresponding to a distribution direction of the multiple battery cells 21 or the multiple battery modules 20, for reducing a phenomenon that an inward tilting of the side plate 120 leads to a relative movement between two adjacent battery cells 21 or two battery modules 20.

By corresponding the arrangement for side plate 120 of the battery box 10 and the positioning member 130 to the distribution direction of the multiple battery cells 21 or the battery module 20, when the battery box 10 can is subjected to an external force in the distribution direction of the multiple battery cells 21 or the battery modules 20, the positioning member 130 can reduce a deformation of the battery box 10 that occurs in the distribution direction of the multiple battery cells 21 or battery modules 20, to reduce a collision shorting of two adjacent battery cells 21 or battery modules 20.

Further, the battery further includes a box cover for a top opening of the battery box 10. The box cover and the battery box 10 form an accommodating space for mounting the battery cell 21 or the battery module 20, and provide protection for the battery cell 21 or the battery module 20.

According to one embodiment of the present disclosure, an electric device is provided. The electric device includes the battery according to one embodiment of the present disclosure.

In the embodiments, a mounting plate 124 is further disposed on the outer wall 122 of the side plate 120 of the battery box 10. The battery is mounted to the electric device by the mounting plate 124. A fit between the mounting plate 124 and the electric device can achieve an objective of limiting a position of the battery box 10, and reduce a short circuit of internal battery cells of the battery box 10 caused by swaying during a collision of the electric device.

According to some embodiments of the present disclosure, a force subjected to the battery box 10 in practice is described below.

Taking the electric device as the electric vehicle, the positioning member 130 as the rivet bolt, and the sleeve 141 and the positioning pad 142 as the rivet nut 140 to be an example, in a scenario of the collision of the whole vehicle of the electric vehicle, when the side plate 120 of the battery box 10 is subjected to the collision force, the side plate 120 can transfer a collision force to the rivet nut 140 and the rivet bolt through the barriers 121 in the side plate 120. When the side plate 120 has a tendency to tilt or deform relative to the bottom plate 110, the rivet nut 140 and the rivet bolt can constrain the side plate 120 at a connection between the side plate 120 and the bottom plate 110 and at a connection between the side plate 120 and the heat dissipation plate 150. An overall shear capacity of the side wall of the battery box 10 is improved by the rivet nut 140 and the rivet bolt, therefore, an overall failure threshold of the side wall of the battery box 10 is increased.

By increasing the overall failure threshold of the side wall of the battery box 10, a tilting and deformation of the positioning member 130 driven by the side plate 120 is reduced, reducing a risk that the side wall of the battery box 10 tilts inward and extrudes the battery cells, and improving a collision safety performance of the battery box 10.

In the embodiments provided by the present disclosure, the collision safety performance of the battery box 10 can be improved only by a connection design of the battery box 10. Therefore, no increase in a collision gap from the side plate 120 of the battery box 10 to the battery cell is required, and no increase in a profile thickness and a profile strength of the side plate 120 of the battery box 10 is required. In this way, a space occupied by the battery box 10 and a weight appreciation of the battery box 10 are reduced, and an impact of a structural modification of the battery box 10 on the cost is reduced.

Finally, it should be noted that the above embodiments are only used to illustrate, rather than to limit, the technical solutions of the present disclosure. Although the present disclosure has been described in detail with reference to the above embodiments, those skilled in the art should understand that modifications may be made to the technical solutions described in the above embodiments, or equivalent replacements may be made to some or all of the technical features of the technical solutions described in the above embodiments. However, these modifications or replacements do not cause the essence of corresponding technical solutions to deviate from the spirit and scope of the technical solutions of the embodiments of the present disclosure, and shall be included in the scope of the claims and the detailed description of the present disclosure. More particularly, each of the technical features mentioned in the embodiments can be combined in any way as long as there is no structural conflict. The present disclosure is not limited to the particular embodiments of the present disclosure, but includes all technical solutions within the scope of the claims.

## Claims

1. A battery box, comprising:
a bottom plate disposed on a bottom of the battery box;
a side plate forming a side portion enclosing the battery box; and
a positioning member passing through the bottom plate and the side plate sequentially to maintain a relative positional relationship between the side plate and the bottom plate, the positioning member comprising a positioning cap and a positioning rod that are connected to each other, a radial dimension of the positioning cap being greater than a radial dimension of the positioning rod, the positioning cap being attached to a bottom of the bottom plate, and the positioning rod passing through the bottom plate and the side plate sequentially.

2. The battery box according to claim 1, further comprising a heat dissipation plate disposed between a bottom of the side plate and a top of the bottom plate, the positioning rod passing through the bottom plate, the heat dissipation plate, and the side plate sequentially.

3. The battery box according to claim 2, wherein:
an interior of the side plate is of a hollow structure; and
the battery box further comprises a sleeve disposed in the interior of the side plate and arranged around a part of the positioning rod.

4. The battery box according to claim 3, wherein:
the heat dissipation plate and the side plate are spaced apart from each other;
the battery box further comprises a positioning pad disposed between the heat dissipation plate and the bottom plate and arranged around a part of the positioning rod.

5. The battery box according to claim 4, wherein the sleeve and the positioning pad are integrally formed into a cap structure.

6. The battery box according to claim 5, wherein:
the cap structure comprises a rivet nut; and
the positioning member comprises a rivet bolt engaged with the rivet nut.

7. The battery box according to claim 6, wherein a plurality of barriers are disposed inside the hollow structure and arranged at intervals in a height direction of the side plate, the rivet bolt and/or the rivet nut passing through at least two layers of barriers of the plurality of barriers.

8. The battery box according to claim 3, wherein:
the bottom plate, the heat dissipation plate, and the side plate are detachably connected together; and
the heat dissipation plate and the bottom plate are spaced apart from each other in a height direction of the battery box.

9. The battery box according to claim 8, wherein:
the sleeve sequentially passes through the heat dissipation plate and the side plate in the height direction of the battery box; and
the positioning rod sequentially passes through the bottom plate, the sleeve, the heat dissipation plate, and the side plate in the height direction of the battery box.

10. A battery, comprising:
at least one battery cell or battery module; and
the battery box according to any one of claims 1 to 9, the at least one battery cell or battery module being disposed in an accommodating space of the battery box.

11. An electric device, comprising the battery according to claim 10.
